# EUROPEAN PATENT APPLICATION

(11) **EP 1 584 449 A1**
(43) Date of publication of application: **12.10.2005**
(21) Application number: 04101462.2
(22) Date of filing: 08.04.2004
(51) Int. Cl.: B29C 65/42, B63B 5/06

(54) **Method for sealing gaps**

(71) Applicant: Smelik, Gerrit, 1621 BS Hoorn (NL); Arizona Chemical B.V., 1322 CE Almere (NL)
(72) Inventor: Smelik, Gerrit, 1621 BS Hoorn (NL)
(74) Representative: Beetz, Tom

(57) **Abstract**

The invention relates to a method of sealing a gap (5) between two adjacent members (1a,1b) selected from wood, cork, and plastic, said gap (5) having walls (3) and a bottom (2) comprising the steps of:
a. melting a polyamide composition having a softening point above 80°C,
b. filling the gap with the molten polyamide composition,
c. solidifying the polyamide composition, thereby forming a seal between the two adjacent members (1a,1b).
The invention pertains further to methods for removing and repairing said seals, and to a device for use in the above method.

## Description

The invention relates to a method of sealing gaps between two adjacent wooden, cork or plastic members, a method of removing seals from the gaps and a method of repairing the seals in the gaps. The invention further relates to a device for sealing said gaps and to a deck of a boat comprising said sealed gaps.

Methods of sealing gaps are known in the art, for instance as disclosed in EP 0 240 298. According to this method, joints are sealed against atmospheric agents, such as water, and are particularly suitable for sealing joints between adjacent planks of a wooden deck. The method prescribes a resilient thermoplastic bead for sealing a gap between two adjacent members. Those "beads" are thermoplastic solid strips of a size that fit into the gap. After bringing the bead into the gap, the material of the bead is heated to render it fluid and to make it adhere to the facing edges (walls) of the adjacent members creating a seal.

As commonly known, weather conditions, among which for instance sunlight, deteriorate plastic material after a period of time, thereby damaging seals. Especially exposure to sunlight for long periods of time is harmful for seals that are more or less continuously exposed thereto, such as is the case for decks of ships. Further water, and particularly sea water affects the seals after a period of time. For ship decks seals have therefore to be replaced regularly. Replacing a seal means performing the process of removing the seal, thoroughly cleaning the gap of all remaining sealant parts and particles and bringing a fresh thermoplastic bead into the gap. If the cleaning of the gap is not performed thoroughly, the adhesion of fresh sealing material will be hampered at sites of the gap where old sealing material has remained. However, thorough cleaning is time consuming due to adherence of the old seal to the walls of the gap, and therefore expensive.

The present invention has to its objective to provide a simple and cheap method of sealing gaps between two adjacent members without the need of thoroughly removing old parts of sealing materials for offering good adhesion. It would further be advantageous if the invention were not restricted to a strip with predetermined size, such that gaps with irregular shapes can easily be filled. The non-requirement of strips having a predetermined size also facilitates the repair of a damaged seal. The sealant material should be resistant to weather conditions and water, and it should be easy to sand.

Above objectives were attained by using a novel method. To this end the invention pertains to a method of sealing a gap between two adjacent members selected from wood, cork, and plastic, said gap having walls and a bottom comprising the steps of:
a. melting a polyamide composition having a softening point above 80° C,
b. filling the gap with the molten polyamide composition,
c. solidifying the polyamide composition, thereby forming a seal between the two adjacent members.

The softening point of the polyamide composition should be above 80° C to ensure that the composition does not becomes soft in sunlight. Preferably the members are of wood.

Although generally good results are obtained using this method, sometimes pores are formed in the seals, decreasing their aesthetic appearance and possibly decreasing their resistance to environmental conditions. This phenomenon was particularly found when wooden members were used. It is believed that pore development is the result of formation of gaseous water (steam) from moisture contained in the member, which is vaporised by contact with the hot polyamide composition. This phenomenon may further have a negative influence on the strength of the seal, for instance by enhancing crack formation in the seal. It was found that this phenomenon could fully be suppressed by adapting the step of filling of the gap with the molten polyamide composition as follows:
b1. coating at least one of the walls of the gap with polyamide composition creating a coated wall and a remaining gap, and thereafter
b2. filling the remaining gap with polyamide composition.

Coating one of the walls of the gap, prior to filling the gap completely, prevents the formation of gaseous moisture bubbles and their release from the members into the polyamide composition and no pore formation thus occurs. After having coated the walls the remaining gap (i.e. the gap minus the coated walls) is filled.

A high temperature of the polyamide composition during coating the wall of the gap enhances the adhesion of the polyamide composition to the member. A temperature of the polyamide composition during coating well above the softening point of said composition is desired. Preferably, the temperature during coating is above 200° C, more preferably between 210 and 230° C.

When filling the remaining gap, the temperature of the molten polyamide composition should be high enough to fuse with the coating, but not too high that it completely melts said coating. Preferably, the temperature of the polyamide composition during filling the remaining gap is lower than the temperature of the polyamide composition during coating. More preferably, the temperature of the polyamide composition during filling the remaining gap is between 140 and 200° C, most preferably between 150 and 175° C.

In practice, it is difficult to use the precise amount of polyamide to fully fill the gap or remaining gap. Thus it is inevitable to apply more polyamide than required for filling the gap. When the excess of molten polyamide comes into contact with uncovered parts of the members, again water can be released from the member as to form gaseous bubbles in the seal. To prevent this undesired contact not only the wall but also the upper edge of the wall is coated with polyamide prior to filling the remaining gap. Thus in a preferred embodiment the polyamide composition protrudes over an upper edge of the wall.

After having filled the remaining gap with polyamide composition, the seal can be finished by removing the protruding parts of solidified composition from the gap. Preferably, such removing is performed by cutting off the excess polyamide with a cutting device having a temperature above the softening point of the polyamide. The temperature of the cutting device preferably is between 200 and 250° C. Optionally, the seal is sanded, which can be performed by any method known in the art.

It was further found that the smoothness of the sanded surface could be enhanced by adding graphite powder to the polyamide composition, improving the sandability considerably. Furthermore, it gives the seal a black colour and thereby a more authentic look. To obtain optimum sandability properties the quantity of graphite powder is preferably less than 30 wt.%. When graphite content is higher than 30 wt.%, adhesion properties of the composition are insufficient to provide acceptable seals. More preferably, 1-10 wt.% of graphite powder are used. Most preferably, 4 to 6 wt.% of graphite powder are used.

Since the wooden members of the deck of a boat and the seal have different coefficients of expansion they will work on each other, which may damage the seal. It is therefore preferred to provide the bottom of the gap with means for preventing adhesion of the polyamide composition to the bottom, which diminishes the work force in the lateral direction. This can, for instance, be attained by applying a strip of anti-adhesive material to the bottom of the gap.

Regularly seals have to be renewed, often after about five years. According to the prior art such removal is a cumbersome process, necessitating complete removal of old seal. The seal of the present invention allows a simplified removal process. To this end a suitable method for removing the seal from a gap comprises the steps of:
a. heating at least a part of the seal above the softening point of the polyamide composition,
b. removing molten polyamide composition from the gap.

The removal of the seal is preferably performed by gouging the polyamide composition from the gap using a cutting device, which is heated above the softening point of the polyamide composition. The cutting device is preferably heated to a temperature between 200 and 250° C. Preferably, the cutting device has the width of the sealed gap as to be able to remove as much as possible of the seal at once, preferably all of the seal. Remaining parts or particles of the seal do not have to be removed thoroughly, since the introduction of a fresh molten polyamide composition into the gap for making a fresh seal will result in melting old seal particles and will incorporate them into the fresh seal.

When seals according to the prior art are damaged, the complete seal, or at least a substantial part thereof, has to be removed and replaced. The use of the seal of the invention avoids total replacing thereof. Thus seals of the invention can be repaired by:
a. optionally, heating the polyamide composition of the seal above its softening point,
b. filling the damaged part of the seal with molten polyamide composition,
c. solidifying the polyamide composition,
d. optionally, cutting off protruding solidified polyamide composition and/or sanding the polyamide composition.

If necessary, also non-damaged parts of the seal around the damaged site can be removed to facilitate the repair of the seal.

The polyamides that can be used in the compositions for seals of the invention are the common polyamides that are commercially available and known to the skilled person. In the context of this invention the term "polyamide" relates to any polymer comprising amide (-CO-NH-) bonds. Particularly useful are thermoplastic hot melt polyamide adhesives designed to bond to a wide variety of substrates and which provide high performance solutions to product assembly applications. Such polyamide can, for instance, be purchased at commercial firms such as Arizona Chemicals, USA. For instance the polyamides series with the trade name Uni-Rez® (such as Uni-Rez® 2645) are very suitable as ingredient for the claimed sealant material.

The invention further pertains to a device, which can coat a wall of a gap and fill the remaining gap as to seal the gap. The device comprises at least a first and a second nozzle head for supplying polyamide composition, the first nozzle head comprising at least one nozzle, which during use, is directed to a wall of the gap so as to coat with polyamide composition, and the second nozzle head being positioned at a distance from the first nozzle head and comprising at least one nozzle for filling the remaining gap with polyamide composition. In a preferred embodiment the first nozzle head of the device can expel a polyamide composition at a higher temperature than the second nozzle head. To this end polyamide composition is tapped off from the stream of polyamide composition which is led to the second nozzle head and the tapped off stream is heated in or at the first nozzle head to the preferred higher temperature.

Preferably the device further comprises a guiding element for maintaining the first nozzle head in lateral position, the width of the guiding element corresponding to the width of the gap.

The invention also pertains to a deck of a boat having wooden, cork or plastic members comprising gaps between two adjacent members, the gaps containing seals comprising a polyamide composition.

The invention will now be explained in more detail with reference to the drawings, which shows as an example a part of a wooden deck of a boat.
Figures 1a-d show three phases of the filling process of the gap, respectively (1a) an unfilled gap between two adjacent wooden members (in this case planks on the deck), (1b) a remaining gap with coated wooden walls, (1c) a detail of coating on a wall and (1d) a filled gap creating a seal.
Figure 2 shows schematically a device for filling the gap in the wooden deck.
Figure 3 shows schematically a top view (3a) and side view (3b) of a first nozzle head.

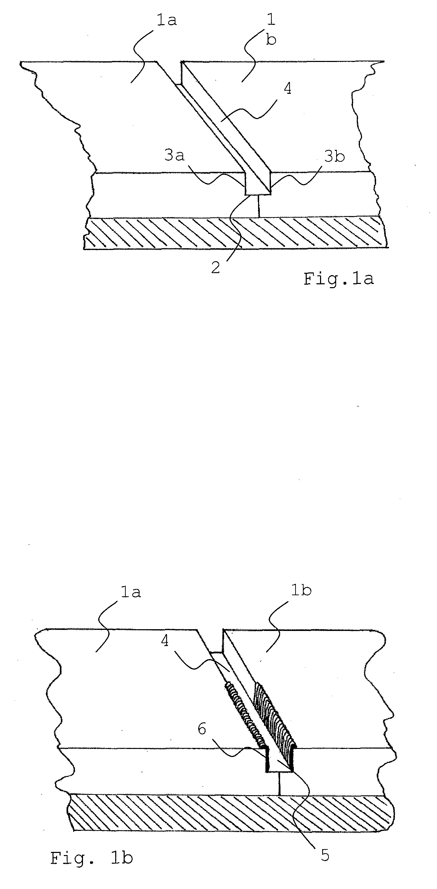

In figure 1a an embodiment with gap (4) which is to be sealed with a polyamide composition, walls (3) and a bottom (2) between two adjacent wooden planks (1b,1b), are shown.

Figure 1b shows an embodiment wherein the walls (3a,3b) of the gap (4) are coated with the polyamide composition (6) to prevent pores forming in the solidified polyamide. Between these coated walls the remaining gap (5) is formed.

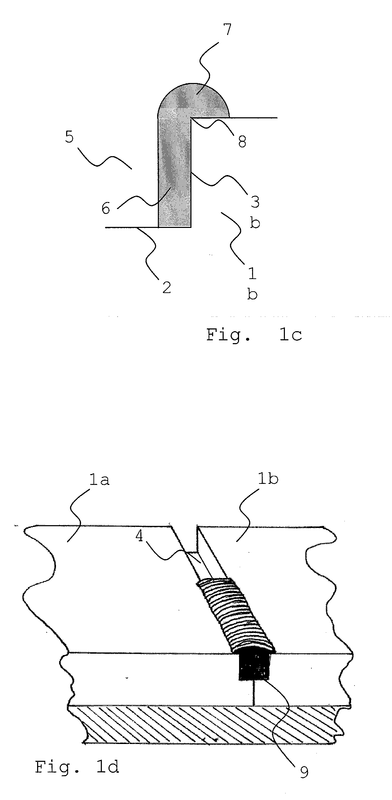

Figure 1c shows a detail of figure 1b wherein the cross-section of the coating (6) on the wall (3b) has a protrusion (7) over the upper edge (8) of the wall (3b).

Figure 1d shows the seal (8) in the deck of the boat after filling the remaining gap (5) with polyamide composition.

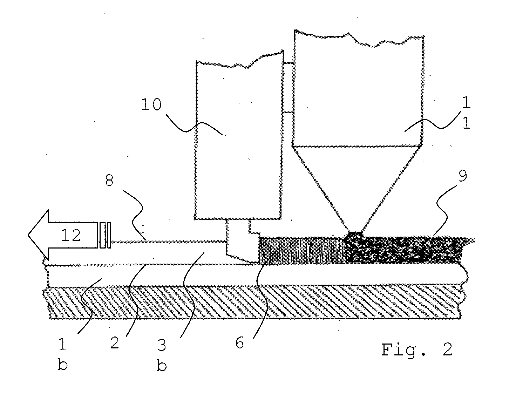

In figure 2 an embodiment of a device is shown, which is capable of sealing the gap as shown in figures 1a-d. The direction of the movement of the device is indicated in the figure by a thick arrow (12). The device comprises two nozzle heads (10,11). The first nozzle head (10) forms a coating (6) on the wall (3b) of the gap (4) and the second nozzle head (11) fills the remaining gap (5) between the walls (3a,3b) provided with a coating (6) to form a seal (9).

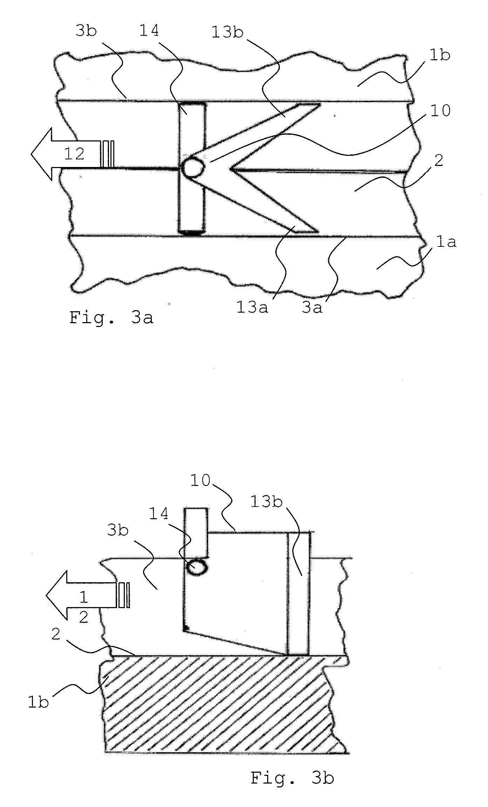

Figure 3 shows the first nozzle head (10) with the thick arrow (12) showing the direction of movement. The nozzle head (10) comprises nozzles (13a,13b) that are directed to the walls (3a,3b) of the gap (4) for applying a polyamide composition thereon. The first nozzle head is maintained in lateral position during movement along the gap (4) by a guiding element (14) having the width of the gap (4) and which is attached to the first nozzle head (10).

## Claims

1. A method of sealing a gap between two adjacent members selected from wood, cork, and plastic, said gap having walls and a bottom comprising the steps of:
a. melting a polyamide composition having a softening point above 80° C,
b. filling the gap with the molten polyamide composition,
c. solidifying the polyamide composition, thereby forming a seal between the two adjacent members.

2. The method according to claim 1, wherein the filling of the gap comprises:
b1. coating at least one of the walls of the gap with polyamide composition creating a coated wall and a remaining gap, and thereafter
b2. filling the remaining gap with polyamide composition.

3. The method according to claim 2, wherein said wall is coated such that the composition protrudes over an upper edge of the wall.

4. The method according to claim 3, wherein the solidified composition that protrudes from the gap is removed.

5. The method according to claim 4, wherein the solidified composition that protrudes from the gap is removed by cutting it off with a cutting device having a temperature above the softening point of the polyamide, and optionally sanding the seal.

6. The method according to any one of the preceding claims, wherein a composition of polyamide and graphite is used.

7. The method according to any one of the preceding claims, wherein prior to filling the gap with the polyamide composition, the bottom of the gap is provided with means for preventing adhesion of the polyamide composition to the bottom of the gap, preferably with a strip of anti-adhesive material.

8. A method of removing a seal from a gap between two adjacent members selected from wood, cork, and plastic, which has been sealed by the method according to any one of the preceding claims comprising the steps of:
a. heating at least a part of the seal above the softening point of the polyamide composition,
b. removing molten polyamide composition from the gap.

9. The method according to claim 8, wherein the seal is removed with a cutting device, which is heated above the softening point of the polyamide composition.

10. A method of repairing a damaged seal comprising a polyamide composition, which seal is contained in a gap between two adjacent members selected from wood, cork, and plastic, comprising the steps:
a. optionally, heating the polyamide composition of the seal above its softening point,
b. filling the damaged part of the seal with molten polyamide composition,
c. solidifying the polyamide composition,
d. optionally, cutting off protruding solidified polyamide composition and/or sanding the polyamide composition.

11. A device for use in the method according to any one of claims 2 to 7, comprising at least a first and a second nozzle head for supplying polyamide composition, the first nozzle head comprising at least one nozzle, which, during use, is directed to a wall of the gap so as to coat the wall with polyamide composition, and the second nozzle head being positioned at a distance from the first nozzle head and comprising at least one nozzle for filling the remaining gap with polyamide composition.

12. The device of claim 11 comprising a guiding element for maintaining the first nozzle head in lateral position and wherein the width of the guiding element corresponds to the width of the gap.

13. A deck of a boat having members selected from wood, cork, and plastic, and gaps between adjacent members, said gaps containing seals **characterised in that** the seals comprise a polyamide composition.
